# EUROPÄISCHE PATENTSCHRIFT

(11) **EP 1 880 812 B1**
(45) Veröffentlichungstag und Bekanntmachung des Hinweises auf die Patenterteilung: **14.01.2009**
(21) Anmeldenummer: 07012160.3
(22) Anmeldetag: 21.06.2007
(51) Int. Cl.: B26D 3/16, F16L 11/10, F16L 57/00

(54) **Verfahren zum Ablängen eines Schlauch-Teilstückes**
Method for trimming a hose section
Procédé destiné à sectionner une partie de tuyau

(30) Priorität: 19.07.2006 DE 102006033409
(43) Veröffentlichungstag der Anmeldung: 23.01.2008
(73) Patentinhaber: Neoperl GmbH, 79379 Müllheim (DE)
(72) Erfinder: Schlitter, Roger, 79117 Freiburg (DE)
(74) Vertreter: Maucher, Wolfgang

(56) Entgegenhaltungen:
- FR-A3- 2 762 376
- JP-A- 7 311 313
- JP-A- 57 184 065

## Beschreibung

Die Erfindung betrifft ein Verfahren zum Ablängen eines Schlauch-Teilstückes von einem Schlauch, welcher Schlauch einen Innenschlauch und eine den Innenschlauch umschließende äußere Schlauchummantelung aufweist, wobei das Schlauch-Teilstück mit Hilfe eines Schneidwerkzeuges an einer Schnittstelle in einer quer zur Längserstreckung des Schlauches orientierten Schnittebene von diesem abgetrennt wird.

Im Sanitärbereich wird häufig der zwischen einer Auslaufarmatur, einem Brausekopf, einer Wasch- oder Geschirrspülmaschine oder dergleichen Verbrauchsstelle vorgesehene Leitungsabschnitt mittels einer flexiblen Schlauchleitung überbrückt. Für eine solche flexible Schlauchleitung wird häufig ein Schlauch verwendet, der einen wasserführenden Innenschlauch und eine den Innenschlauch umschließende äußere Schlauchummantelung aus einem Metall-und/oder Kunststoffgeflecht aufweist. Die zum Herstellen solcher Schlauchleitungen erforderliche Schlauchware ist regelmäßig auf großen Trommeln (sog. Coils) aufgespult, so dass das vorgesehene Schlauch-Teilstück abgespult, in der jeweils benötigten Länge abgelängt und an einer Schnittstelle vom verbleibenden Schlauchmaterial abgetrennt werden kann. Beim Abtrennen des Schlauch-Teilstückes besteht jedoch häufig das Problem, dass das als schützende Schlauchummantelung dienende Metallgeflecht derart ausgefranst wird, dass die einzelnen Fäden (sog. Monofile) des Geflechts seitlich nach außen vorstehen. Da ein an seinem Schlauchende derart ausgefranster Schlauch nicht mehr seine gewünschte Form und seinen definierten Außendurchmesser einhält, lässt sich auf das Schlauchende die zum Fixieren eines Anschlussfittings erforderliche Klemmhülse nur mit großen Mühen aufschieben.

Man hat daher auch bereits ein Verfahren entwickelt, bei welchem der Schlauch während des Abtrennvorganges mit Hilfe von Spannbacken-Paaren eingespannt und nach dem Trennvorgang erneut kalibriert wird. Nachdem der mit Hilfe der Spannbacken-Paare fixierte Schlauch an der Schnittstelle durchtrennt wurde, werden die Spannbacken-Paare zu den Schlauchenden des Schlauch-Teilstückes verschoben und das Schlauchgeflecht derart "gekämmt" oder kalibriert, dass das abgetrennte Schlauch-Teilstück an seinen Schlauchenden wieder im Wesentlichen den definierten Außendurchmesser und weitgehend auch die ursprüngliche Form hat. Beim anschließenden Aufschieben der Klemmhülsen besteht jedoch die Gefahr, dass einzelne Metall- oder Kunststofffäden des Geflechts sich im Inneren der Klemmhülsen verhaken können und dass dadurch das Geflecht zurückgeschoben wird.

Es besteht daher die Aufgabe, ein Verfahren der eingangs erwähnten Art zu schaffen, das die Herstellung und die Weiterverarbeitung solcher Schlauch-Teilstücke wesentlich erleichtert. Darüber hinaus besteht auch die Aufgabe, ein Schlauch-Teilstück der eingangs erwähnten Art zu schaffen, das mit möglichst geringem Aufwand weiterverarbeitet werden kann.

Die erfindungsgemäße Lösung dieser Aufgabe besteht bei dem Verfahren der eingangs erwähnten Art darin, dass die Schlauchummantelung des Schlauches mittels einer durchtrennbaren Schlauchfixierung umhüllt wird, welche die vorgesehene Schnittstelle vorzugsweise etwa mittig überdeckt, bevor das Schlauch-Teilstück an der Schnittstelle vom Schlauch mit Hilfe des Schneidwerkzeuges abgetrennt wird.

Das erfindungsgemäße Verfahren sieht vor, dass die Schlauchummantelung vor dem Durchtrennen des Schlauches mittels einer durchtrennbaren Schlauchfixierung umhüllt wird, welche die vorgesehene Schnittstelle überdeckt. Diese Schlauchfixierung markiert nicht nur die vorgesehene Schnittstelle, sondern wirkt einem Ausfransen der Schlauchummantelung an der Schnittstelle entgegen. Da einem Ausfransen der Schlauchummantelung entgegengewirkt wird, und da der Schneidvorgang somit nicht zu einer Verformung des Schlauches und zu einer Veränderung des Außendurchmessers führen kann, lässt sich auch die in einem nachfolgenden Verfahrensschritt eventuell erforderliche Klemmhülse bequem auf das entsprechende Schlauchende aufschieben. Da einem Ausfransen der Schlauchummantelung entgegengewirkt wird, und da einzelne Fäden des Geflechts nicht nach außen vorstehen können, wird der Gefahr eines Verschiebens des Geflechts beim Aufschieben einer Klemmhülse entgegengewirkt und auch die durch solche vorstehenden Fäden verursachte Verletzungsgefahr vermieden. Da das erfindungsgemäße Verfahren auf die oben erwähnten Spannbacken-Paare verzichten kann und da das erfindungsgemäße Verfahren somit auch keinen Werkzeugwechsel erfordert, erleichtert das erfindungsgemäße Verfahren die Herstellung solcher Schlauch-Teilstücke wesentlich.

Als Schlauchfixierung kann beispielsweise ein Schrumpfschlauch dienen, der auf den Schlauch bis zur vorgesehenen Schnittstelle aufgeschoben und dort unter Wärmeeinwirkung aufgeschrumpft wird, bevor anschließend das benötigte Schlauch-Teilstück von dem verbleibenden Schlauch-Abschnitt abgetrennt wird. Eine bevorzugte Ausführungsform gemäß der Erfindung sieht jedoch vor, dass als Schlauchfixierung ein auf der Schlauchummantelung fixiertes und/oder die Schlauchummantelung umgreifendes Klebeband vorgesehen ist. Mit Hilfe eines solchen Klebebandes lässt sich die vorgesehene Schnittstelle bequem markieren und einem Verändern des Schlauch-Außendurchmessers während des Schneidvorgangs auf einfache Weise entgegenwirken.

Die im Bereich der Schnittstelle auf der Schlauchummantelung vorgesehene Schlauchfixierung sollte den Schlauch möglichst stramm und/oder formschlüssig umschließen. Dazu ist es beispielsweise möglich, dass das Klebeband mit seiner nach außen weisenden Klebeschicht derart eng um den Schlauch umwickelt wird, dass ein axiales Verschieben der Schlauchfixierung auf dem Schlauch kaum noch möglich ist. Besonders vorteilhaft ist es jedoch, wenn das als Schlauchfixierung vorgesehene Klebeband mit seiner Klebeschicht auf der Schlauchummantelung fixiert wird. Damit wird das als Schlauchfixierung dienende Klebeband mittels seiner Klebeschicht an der Schlauchummantelung des Schlauches unverrückbar gehalten.

Eine bevorzugte Ausführungsform gemäß der Erfindung sieht vor, dass der Schlauch ein sanitärer Wasserschlauch und/oder die Schlauchummantelung ein Metallgeflecht ist.

Besonders vorteilhaft ist es, wenn als Schneidwerkzeug ein Kreismesser vorgesehen ist. Mit Hilfe eines rotierenden Kreismessers kann die Gefahr eines Ausfransens der Schlauchummantelung noch zusätzlich verringert werden.

Weitere Merkmale der Erfindung ergeben sich aus der folgenden Beschreibung eines erfindungsgemäßen Ausführungsbeispieles in Verbindung mit den Ansprüchen sowie der Zeichnung.

Es zeigt:
- Fig. 1: einen mit einem Geflecht umflochtenen Schlauch in einer perspektivischen Darstellung, wobei zum Ablängen eines Schlauch-Teilstückes im Bereich der vorgesehenen Schnittstelle ein Klebeband bereitgestellt ist,
- Fig. 2: den Schlauch aus Fig. 1, wobei die Schnittstelle mit Hilfe eines Klebeband-Abschnittes fixiert ist, der die Schnittstelle überdeckt, die Schlauchummantelung eng umgreift und mit seiner Klebeschicht an der Schlauchummantelung unverrückbar gehalten wird,
- Fig. 3: den ebenfalls in einer perspektivischen Darstellung gezeigten Schlauch, der mit Hilfe eines bereitgestellten rotierenden Kreismessers in ein abgelängtes Schlauch-Teilstück und in das verbleibende Schlauchmaterial aufgetrennt wurde,
- Fig. 4.: das mittels dem als Schlauchfixierung dienende Klebeband gesicherte Schlauchende des Schlauch-Teilstückes, wobei das Aufschieben einer topfförmigen Klemmhülse auf das Schlauchende angedeutet ist, und
- Fig. 5: das von dem in den Figuren 1 bis 3 dargestellte Schlauch abgelängte Schlauch-Teilstück mit der auf sein Schlauchende aufgeschobenen Klemmhülse.

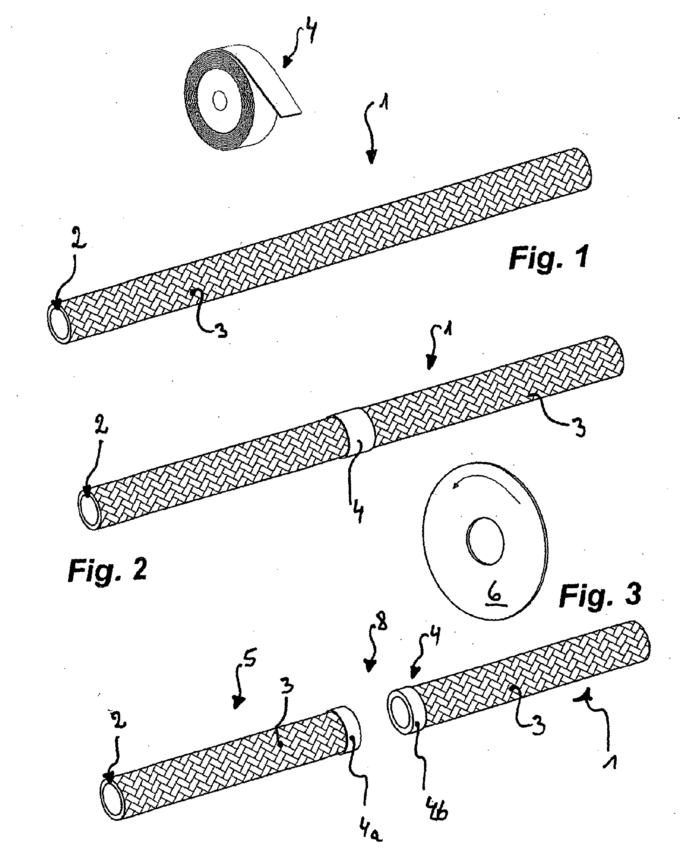

In Figur 1 ist ein Schlauch 1 dargestellt, der einen Innenschlauch 2 und eine den Innenschlauch 2 umschließende äußere Schlauchummantelung 3 aufweist. In Figur 1 ist angedeutet, dass die Schlauchummantelung 3 hier als Metallgeflecht ausgestaltet ist, dessen Fäden (sog. Monofile) um den Schlauch 1 geflochten sind. Der Schlauch 1 kann beispielsweise als Meterware auf einer Schlauch-Trommel (sog. Coil) bevorratet sein. Von diesem Schlauch-Vorrat sind die benötigten Schlauch-Teilstücke einzeln abzutrennen.

Zum Ablängen des Schlauch-Vorrats wird eine durchtrennbare Schlauchfixierung 4 bereitgestellt, die hier als Klebeband ausgebildet ist. Diese Schlauchfixierung 4 wird derart um die Schlauchummantelung 3 umwickelt, dass die Schlauchfixierung 4 die vorgesehene Schnittstelle überdeckt und eng an der Schlauchummantelung 3 anliegt.

In Figur 2 ist gezeigt, dass das als Schlauchfixierung 4 dienende Klebeband hier mit seiner Klebeschicht auf der Schlauchummantelung 3 fixiert wird. Dabei wird das Klebeband 4 zumindest einmal vollständig um den Schlauch 1 gewickelt. Das gemäß Figur 2 auf dem Schlauch fixierte Klebeband markiert die vorgesehene Schnittstelle.

In einem nachfolgenden Verfahrensschritt, der in Figur 3 angedeutet ist, kann das benötigte und in der gewünschten Länge abgelängte Schlauch-Teilstück 5 vom verbleibenden Schlauchmaterial 1 abgetrennt werden. Zum Abtrennen des Schlauch-Teilstückes 5 ist hier ein rotierendes Kreismesser 6 vorgesehen - , gegebenenfalls sind aber auch andere Schneidwerkzeuge verwendbar, die den Schlauch 1 sauber durchtrennen können.

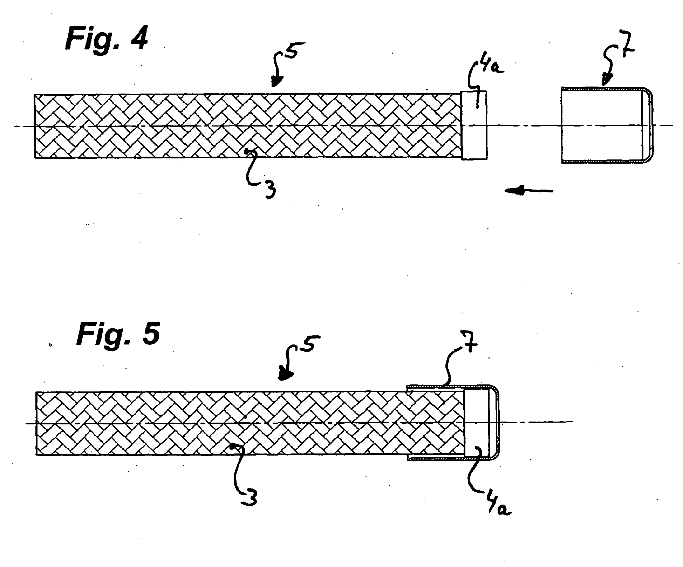

In Figur 3 ist erkennbar, dass nach dem Durchtrennen die einander zugewandten Schlauchenden des Schlauch-Teilstückes 5 einerseits und des verbleibenden Schlauchmaterials 1 andererseits mittels eines Klebeband-Abschnittes 4a, 4b gesichert sind. Da das Klebeband 4 während des Trennvorganges einem Ausfransen seiner Schlauchummantelung 3 entgegenwirkt, und da an den Schlauchenden der abgetrennte Abschnitt 4a, 4b des vorzugsweise mittig durchtrennten Klebebandes 4 verbleibt, kann auf das auch nach dem Abtrennen formgerechte Schlauchende des Schlauch-Teilstückes 5 eine in Figur 4 und 5 dargestellte Klemmhülse 7 aufgeschoben werden, die beispielsweise zum Fixieren eines in die Innenhöhlung des Innenschlauches 2 eingeschobenen Anschlussnippels eines Anschlussfittings benötigt wird. Dabei wird das Aufschieben der Klemmhülse 7 nicht durch seitlich abstehende Metallfäden eines ausgefransten Metallgeflechts 3 behindert. Ein "Kämmen" oder Kalibrieren des abgelängten Schlauch-Teilstückes 5 mit Hilfe von Spannbacken und ein Werkzeugwechsel ist bei dem hier beschriebenen Verfahren nicht erforderlich.

Mit Hilfe des hier beschriebenen Verfahrens lässt sich ein Schlauch-Teilstück herstellen, auf dessen Schlauchummantelung 4 an zumindest einem Schlauchende ein Klebeband 4a mit seiner Klebeschicht fixiert ist, welches Klebeband 4a die Schlauchummantelung 3 umgreift.

## Patentansprüche

1. Verfahren zum Ablängen eines Schlauch-Teilstückes (5) von einem Schlauch (1), welcher Schlauch (1) einen Innenschlauch (2) und eine den Innenschlauch (2) umschließende äußere Schlauchummantelung (3) aufweist, wobei das Schlauch-Teilstück (5) mit Hilfe eines Schneidwerkzeuges (6) an einer Schnittstelle (8) in einer quer zur Längserstreckung des Schlauches (1) orientierten Schnittebene von diesem abgetrennt wird, **dadurch gekennzeichnet, dass** die Schlauchummantelung (3) des Schlauches (1) mittels einer durchtrennbaren Schlauchfixierung (4) umhüllt wird, welche die vorgesehene Schnittstelle (8) überdeckt, bevor das Schlauch-Teilstück (5) an der Schnittstelle (8) vom Schlauch (1) mit Hilfe des Schneidwerkzeuges (6) abgetrennt wird.

2. Verfahren nach Anspruch 1, **dadurch gekennzeichnet, dass** als Schlauchfixierung (4) ein auf der Schlauchummantelung (3) fixiertes und/oder die Schlauchummantelung (3) umgreifendes Klebeband (4) vorgesehen ist.

3. Verfahren nach Anspruch 1 oder 2, **dadurch gekennzeichnet, dass** das als Schlauchfixierung (4) vorgesehene Klebeband (4) mit seiner Klebeschicht auf der Schlauchummantelung (3) fixiert wird.

4. Verfahren nach Anspruch 1 oder 2, **dadurch gekennzeichnet, dass** als Schlauchfixierung (4) ein Schrumpfschlauch oder Schrumpfband vorgesehen ist.

5. Verfahren nach einem der Ansprüche 1 bis 4, **dadurch gekennzeichnet, dass** der Schlauch (1) ein sanitärer Wasserschlauch und/oder die Schlauchummantelung (3) ein Metall- und/oder Kunststoffgeflecht ist.

6. Verfahren nach einem der Ansprüche 1 bis 5, **dadurch gekennzeichnet, dass** als Schneidwerkzeug (6) ein Kreismesser (6) vorgesehen ist.

## Claims

1. Method for trimming a hose section (5) from a hose (1), said hose (1) having an inner hose (2) and an outer hose casing (3) surrounding the inner hose (2), the hose section (5) being trimmed off from the hose by means of a cutting tool (6) at a cutting point (8) in a cutting plane at right angles to the longitudinal extent of the hose (1), **characterised in that** the hose casing (3) of the hose (1) is enveloped by a hose fixing (4) adapted to be cut through which covers the intended cutting point (8) before the hose section (5) is trimmed from the hose (1) at the cutting point (8) using the cutting tool (6).

2. Method according to claim 1, **characterised in that** an adhesive tape (4) is provided as the hose fixing (4), this adhesive tape (4) being fixed to the hose casing (3) and/or surrounding the hose casing (3).

3. Method according to claim 1 or 2, **characterised in that** the adhesive tape (4) provided as the hose fixing (4) is fixed by its adhesive coating to the hose casing (3).

4. Method according to claim 1 or 2, **characterised in that** a shrink tube or shrink tape is provided as the hose fixing (4).

5. Method according to one of claims 1 to 4, **characterised in that** the hose (1) is a sanitary water hose and/or the hose casing (3) is a metal and/or plastics mesh.

6. Method according to one of claims 1 to 5, **characterised in that** a circular blade (6) is provided as the cutting tool.

## Revendications

1. Procédé pour sectionner un tronçon de tuyau (5) d'avec un tuyau (1), lequel tuyau (1) comprend un tuyau intérieur (2) et un enrobage extérieur (3) entourant ledit tuyau intérieur (2), le tronçon de tuyau (5) étant séparé du tuyau à l'aide d'un outil de coupe (6), dans une zone de sectionnement (8), dans un plan de sectionnement orienté perpendiculairement à l'étendue longitudinale dudit tuyau (1), **caractérisé par le fait que** l'enrobage (3) du tuyau (1) est enveloppé au moyen d'un élément dissociable (4) d'assujettissement dudit tuyau, qui recouvre la zone de sectionnement prévue (8) avant que ledit tronçon de tuyau (5) soit séparé d'avec ledit tuyau (1) dans ladite zone de sectionnement (8), à l'aide de l'outil de coupe (6).

2. Procédé selon la revendication 1, **caractérisé par le fait qu'**il est prévu, en tant qu'élément (4) d'assujettissement du tuyau, un ruban adhésif (4) consigné à demeure sur l'enrobage (3) dudit tuyau et/ou ceinturant ledit enrobage (3) du tuyau.

3. Procédé selon la revendication 1 ou 2, **caractérisé par le fait que** le ruban adhésif (4), prévu en tant qu'élément (4) d'assujettissement du tuyau, est consigné à demeure par sa couche adhésive sur l'enrobage (3) dudit tuyau.

4. Procédé selon la revendication 1 ou 2, **caractérisé par le fait qu'**un flexible thermorétractible ou un ruban thermorétractible est prévu en tant qu'élément (4) d'assujettissement du tuyau.

5. Procédé selon l'une des revendications 1 à 4, **caractérisé par le fait que** le tuyau (1) est un flexible à eau sanitaire, et/ou l'enrobage (3) dudit tuyau est un tressage de métal et/ou de matière plastique.

6. Procédé selon l'une des revendications 1 à 5, **caractérisé par le fait qu'**un tranchoir circulaire (6) est prévu en tant qu'outil de coupe (6).
